# EUROPEAN PATENT SPECIFICATION

(11) **EP 4 424 951 B1**
(45) Date of publication and mention of the grant of the patent: **06.05.2026**
(21) Application number: 24160361.2
(22) Date of filing: 28.02.2024
(51) Int. Cl.: E04H 6/42, B60L 50/60

(54) **PARKING MANAGEMENT SYSTEM**
PARKVERWALTUNGSSYSTEM
SYSTÈME DE GESTION DE STATIONNEMENT

(30) Priority: 28.02.2023 JP 2023030014
(43) Date of publication of application: 04.09.2024
(73) Proprietor: TOYOTA JIDOSHA KABUSHIKI KAISHA, Toyota-shi, Aichi-ken 471-8571 (JP)
(72) Inventor: MATSUBARA, Takuji, Toyota-shi, Aichi-ken 471-8571 (JP); YUMITA, Osamu, Toyota-shi, Aichi-ken 471-8571 (JP); HASEGAWA, Naoki, Toyota-shi, Aichi-ken 471-8571 (JP); KANO, Sa, Toyota-shi, Aichi-ken 471-8571 (JP)
(74) Representative: Cabinet Beau de Loménie

(56) References cited:
- WO-A1-2018/167796
- JP-A- 2007 252 117
- JP-A- 2013 042 634
- US-A1- 2021 380 011

## Description

### Technical Field

The present disclosure relates to a parking management system, more particularly, to a parking management system that manages the movement of a plurality of movable pallets carrying vehicles into parking spaces.

### Background

A parking management system of this type has been proposed, which is equipped with a stationary storage battery installed in a parking lot and a plurality of charging and discharging stands for charging and discharging a battery mounted on an electric vehicle (see, for example, Patent Document 1) . In this system, power is supplied to the first load from at least one of the stationary storage batteries and the multiple charging and discharging stands, even when the power system is in an emergency. As a result, even when the power system is in an emergency, the prescribed power can be supplied to the first load. Other similar parking management systems have been disclosed in Patent Documents 2 to 4.

### Citation List

### Patent Literature

Patent Document 1: JP2020-010442
Patent Document 2: US 2021/380011 A1
Patent Document 3: WO 2018/167796 A1
Patent Document 4: JP 2013 042634 A

### Summary

In the parking lot where power from a battery installed in the electric vehicle can be supplied to predetermined facilities (for example, airports or shopping malls), it is difficult to install all parking spaces as chargeable and dischargeable parking spaces in with charging and discharging devices for the battery installed in the electric vehicle. In addition, electric vehicles parked in parking spaces where charging and discharging devices are not installed cannot supply power to the predetermined facility. Therefore, it is an important issue for electric vehicles that are chargeable and dischargeable to a predetermined facility to be parked in parking spaces where charging and discharging devices are installed.

The main objective of the parking management system of the present disclosure is to allow more electric vehicles that are chargeable and dischargeable to the predetermined facility to park in the parking space where charging and discharging devices is installed.

The parking management system of the present disclosure has adopted the following measures to achieve the main objectives described above.

The parking management system of the present disclosure equipped with a plurality of pallets that can be moved in a parking space with a vehicle mounted on them, a plurality of charging and discharging devices that are installed in chargeable and dischargeable parking spaces and capable of supplying power to a predetermined facility, a controller that controls the movement of the pallets and controls the charging and discharging devices; the controller is programmed to move a pallet (a feedable pallet) carrying the electric vehicle capable of supplying power to the predetermined facility to the chargeable and dischargeable parking space.

The parking management system of the present disclosure equipped with a plurality of pallets that can be moved in a parking space with a vehicle mounted on them, a plurality of charging and discharging devices that are installed in chargeable and dischargeable parking spaces and capable of supplying power to a predetermined facility, a controller that controls the movement of the pallets and controls the charging and discharging devices. the controller is programmed to move a pallet (a feedable pallet) carrying an electric vehicle capable of supplying power to the predetermined facility to the chargeable and dischargeable parking spaces. By moving the feedable pallet to the chargeable and dischargeable parking spaces, the electric vehicle that can feed the predetermined facility can be parked in a chargeable and dischargeable parking space. As a result, it is possible to have more electric vehicles that can feed the predetermined facility parked in parking spaces where charging and discharging devices are installed.

In the parking management system of the present disclosure, the chargeable and dischargeable parking spaces may comprise a first parking space with a short feed line to the predetermined facility and a second parking space with a longer feed line to the predetermined facility compared to the first parking space, the controller may be programmed to preferentially move the feedable pallet to the first parking space. By moving more feedable pallets to first parking spaces with shorter feed lines, it is possible to reduce the power loss when feeding power to the predetermined facility. In the parking management system in this case, the chargeable and dischargeable parking spaces may be located in a part of a multi-story multi-level parking space or in a portion of a flat parking space arranged in a flat area.

In the parking management system of the present disclosure, the parking management system may be equipped with a plurality of charging devices installed in chargeable parking spaces that can only be used for charging, the controller may be programmed to move the feedable pallet to the chargeable and dischargeable parking spaces when the feedable pallet is in a general parking space where neither charging nor feeding is allowed or in the chargeable parking spaces. This way, it is possible to have more electric vehicles that can feed the predetermined facility parked in the parking spaces where the charging and dischargeable devices are installed. In the parking management system in this case, the chargeable and dischargeable parking spaces may be located at a short distance to the predetermined facility. In this way, it is possible to reduce the power loss when feeding power to the predetermined facility.

In the parking management system of the present disclosure, the controller may be programmed to preferentially move a pallet carrying electric vehicles whose on-board batteries are in a condition to feed power to the predetermined facility (conditioned pallet) to the chargeable and dischargeable parking spaces. In this way, the predetermined facility can be fed more efficiently than if the pallets that do not meet the feedable conditions are moved to the chargeable and dischargeable parking spaces. The feeding condition can be a condition in which the capacity of the on-board power storage device is above a predetermined value or the remaining capacity of the storage device is above a predetermined value.

### Brief Description of Drawings

Figure 1 shows the schematic configuration of the parking management system 20 as an embodiment of this disclosure.
Figure 2 shows the schematic configuration of the vehicle configurations that can use the chargeable and dischargeable parking spaces 32 in the parking lot 30.
Figure 3 shows the flowchart of an example of a pallet movement process executed by the electronic control unit 60.
Figure 4 shows the schematic configuration of the parking lot 30B in the modified configuration.

### Description of Embodiments

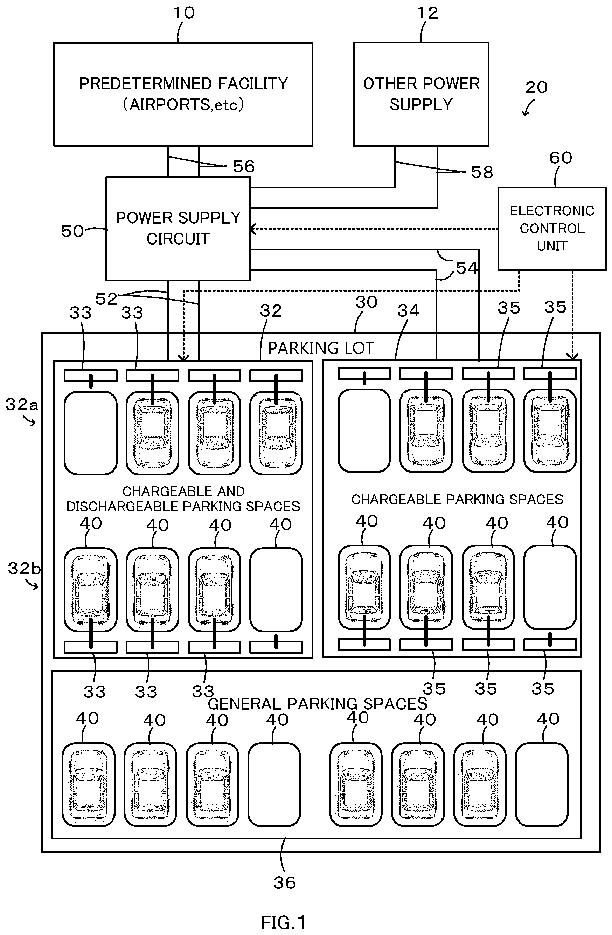

The embodiment of this disclosure is described next. Figure 1 shows the schematic configuration of the parking management system 20 as an embodiment of this disclosure. The parking management system 20 of the embodiment, as shown in the figure, is equipped with a plurality of pallets 40, each placed in a parking space of parking lot 30 and movable with a vehicle mounted thereon, a plurality of charging and discharging devices 33 installed in chargeable and dischargeable parking spaces 32 of the parking lot 30, a plurality of charging devices 35 installed in chargeable parking spaces 34 of the parking lot 30, the power supply circuit 50, and the electronic control unit 60.

The parking lot 30 has one or more chargeable and dischargeable parking spaces 32, one or more chargeable and dischargeable parking spaces 34, and one or more general parking spaces 36. The one or more chargeable and dischargeable parking spaces 32 are located in the area of the parking lot 30 that is closest to the predetermined facility 10, and each one is equipped with a charging and discharging device 33 for charging and discharging a battery mounted on a vehicle. The reason that the one or more chargeable and dischargeable parking spaces 32 are located in the area of the parking lot 30 that is closest to the predetermined facility 10 is to reduce the power loss (loss) when supplying the predetermined facility 10 with power from a battery installed in an electric vehicle parked in each of the one or more chargeable and dischargeable parking spaces 32. The one or more chargeable and dischargeable parking spaces 32 may be divided into one or more first parking spaces 32a (the upper parking spaces in Figure 1), which are closer to the predetermined facility 10, and one or more second parking spaces 32b (the lower parking spaces in Figure 1), which are farther from the predetermined facility 10. The predetermined facility 10 will be described assuming an airport as an embodiment, but it can also be a large leisure facility with hotels, etc., a shopping center, a railroad station, a port, and so on.

The one or more chargeable parking spaces 34 are located in an area of parking lot 30 that is farther from the predetermined facility 10 than the chargeable and dischargeable parking spaces 32, and each one has a charging device 35 that can only charge a battery installed in a vehicle. The one or more general parking spaces 36 are located in the area of the parking lot 30 farthest from the predetermined facility 10, and none is equipped with a charging and discharging device 33 or a charging device 35.

Each of the pallets 40 in the parking lot 30 is provided with a moving mechanism (not shown) such that it can be moved to each parking space with the vehicle on it, and the movement is controlled by the electronic control unit 60.

The power supply circuit 50 is located between the one or more chargeable and dischargeable parking spaces 32 in the parking lot 30 and the predetermined facility 10. The power supply circuit 50 is connected to each charging and discharging device 33 in the one or more chargeable and dischargeable parking spaces 32 by the power line 52 and to each charging device 35 in the one or more chargeable parking space 34 by the power line 54. Also, the power supply circuit 50 is connected to the electrical facility (not shown) of the predetermined facility 10 by one or more power lines 56 and to the other power supply 12 by one or more power lines 58. The other power supply 12 is configured to include at least some of various power sources, such as a commercial power supply, a solar power supply, a wind power supply, a tidal power supply, and a geothermal power supply, for example. The power supply circuit 50 is configured as a circuit that adjusts voltage of power supplied from the other power supply 12 and supplies it to the predetermined facility 10, the charging and discharging device 33, and the charging device 35, or adjusts voltage of power from the battery installed in the electric vehicle via the charging and discharging device 33 and supplies it to the predetermined facility 10.

The electronic control unit 60, not shown, is configured as a microcomputer with a CPU at its core. The electronic control unit 60 inputs a voltage Vin from a voltage sensor (not shown) and a current Iin from a current sensor (not shown) attached to the other power supply 12, a voltage Vcd from a voltage sensor (not shown) and a current Icd from a current sensor (not shown) attached to the power line 52 connected to each charging and discharging device 33 in the one or more chargeable and dischargeable parking spaces 32, a voltage Vch from a voltage sensor (not shown) and a current Ich from a current sensor (not shown) attached to the power line 54 connected to each charging device 35 in the one or more chargeable parking spaces 34, a voltage Vout from a voltage sensor (not shown) and a current Iout from a current sensor (not shown) attached to the electrical facility of the predetermined facility 10. The electronic control unit 60 outputs drive control signals to the moving mechanism for moving each of the pallets 40, control signals to each charging and discharging device 33 in the one or more chargeable and dischargeable parking spaces 32, and control signals to each charging device 35 in the one or more chargeable parking spaces 34. The electronic control unit 60 provides drive control signals to each relay (not shown) installed on each power line 52, 54, 56, 58 within the power supply circuit 50, and drive control signals to each of the provided power converters (not shown) attached to each of power line 52, 54, 56, 58 within the power supply circuit 50.

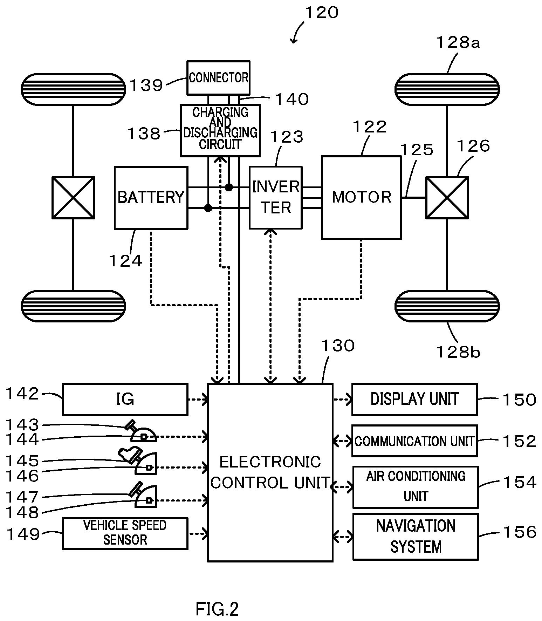

A vehicle that can use the one or more chargeable and dischargeable parking spaces 32 in the parking lot 30 can be, for example, the electric vehicle 120 illustrated in Figure 2. The electric vehicle 120 is equipped with a motor 122, an inverter 123, a battery 124, a charging and discharging circuit 138, a connector 139, and an electronic control unit 130.

The motor 122 is configured, for example, as a synchronous generator motor. The rotor of the motor 122 is connected to a drive shaft 125 connected to drive wheels 128a, 128b via a differential gear 126. The motor 122 is driven by three-phase AC power applied by the inverter 123 after DC power from the battery 124 is converted to three-phase AC power by the inverter 123. The battery 124 is configured as a well-known lithium-ion rechargeable battery or nickel-metal hydride rechargeable battery.

The charging and discharging circuit 138 is connected at one end to a power line connected to the battery 124 and at the other end to the connector 139 for connection to the one or more charging and discharging devices 33 or the one or more charging devices 35. The charging and discharging circuit 138 has a charging and discharging relay, which is not shown in the figure. The charging and discharging circuit 138 is connected to and disconnected from the battery 124 by the charging and discharging relay.

The electronic control unit 130 is configured as a microcomputer, which is mainly composed of a CPU, not shown in the figure. The electronic control unit 130 receives signals from various sensors via input ports. For example, the electronic control unit 130 inputs an ignition signal from an ignition switch 142, a shift position SP from a shift position sensor 144 that detects the position of a shift lever 143, an acceleration Acc from an accelerator pedal position sensor 146 that detects an amount of depressing an accelerator pedal 145, a brake position BP from a brake pedal position sensor 148 that detects the amount of depressing a brake pedal 147, and ta vehicle speed V from a speed sensor 149. The electronic control unit 130 also inputs a rotation position θ from the rotation position sensor (not shown) that detects a rotation position of the motor 122, a battery voltage Vb from a voltage sensor (not shown) attached to an output terminal of the battery 124, a battery current Ib from a current sensor (not shown) attached to an output terminal of the battery 124, a charging and discharging voltage Vchg from a voltage sensor attached to the charging and discharging circuit 138, and a charging and discharging current Ichg from a current sensor attached to the charging and discharging circuit 138.

The electronic control unit 130 outputs various control signals via output ports. For example, the electronic control unit 130 outputs a display control signal to a display unit 150, a communication control signal to a communication unit 152, and an air conditioning control signal to an air conditioning unit 154. The electronic control unit 130 also outputs a switching control signal for switching the switching elements (not shown) to the inverter 123 to drive the motor 122, a drive control signal to a system main relay (not shown) mounted near the battery 124, and a drive control signal to the charging and discharging relay (not shown) attached to the charging and discharging circuit 138. The electronic control unit 130 communicates with a navigation system 156, which displays various information and provides route guidance. The electronic control unit 130 has a signal line 140 connected to it to communicate with the charging and discharging device 38 when the charging and discharging device 38 is connected via the connector 139.

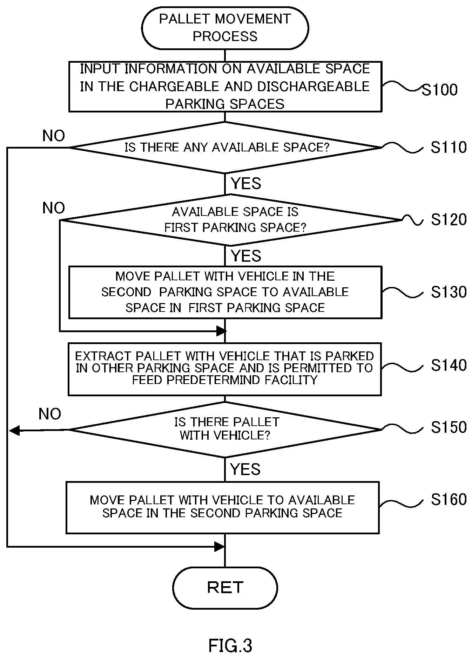

Next, the operation of the parking management system 20 of the embodiment thus configured will be described, particularly in the movement of pallets 40. Figure 3 shows the flowchart of an example of a pallet movement process executed by the electronic control unit 60. The pallet moving process is repeated every predetermined time.

When the pallet movement process is executed, the electronic control unit 60 first inputs information on available spaces among the chargeable and dischargeable parking spaces 32 in the parking lot 30 (step S100) and determines whether or not there are any available spaces among the one or more chargeable and dischargeable parking spaces 32 (step S110). In the embodiment, the electronic control unit 60 inputs vehicle information such as the scheduled entry date and time, the scheduled exit date and time, the type of vehicle, whether the vehicle is electric vehicle or not, whether the vehicle is allowed to feed power to the predetermined facility 10, and whether the vehicle is charged, when parking in each parking space or when making a parking reservation, and assigns a parking space for the vehicle. The electronic control unit 60 stores the vehicle information and the space information of the assigned parking space as parking information. The electronic control unit 60 retrieves information on available spaces among the one or more chargeable and dischargeable parking spaces 32 in the parking lot 30 by searching the parking information for available spaces in the chargeable and dischargeable parking spaces 32 at the current time. For vehicles that are electric vehicles and are permitted to feed the predetermined facility 10, priority is given to the one or more chargeable and dischargeable parking spaces 32, the one or more chargeable parking spaces 34, and the one or more general parking spaces 36, in that order. For vehicles that are electric vehicles but are not permitted to feed the predetermined facility 10, priority is given to the one or more chargeable parking spaces 34, and then to the one or more general parking spaces 36. For vehicles that are not electric vehicles, the one or more general parking spaces 36 are assigned. When the electronic control unit 60 determines in step S110 that there are no spaces available among the one or more chargeable and dischargeable parking spaces 32, it terminates this process without moving the pallet 40.

The electronic control unit 60 determines that there is available space among the one or more chargeable and dischargeable parking spaces 32 in step S110, and then determines whether the available space is among the one or more first parking spaces 32a (step S120). The electronic control unit 60 determines that available space among the one or more chargeable and dischargeable parking spaces 32 is among the one or more first parking spaces 32a, it moves one or more pallets 40 with vehicles in the one or more second parking spaces 32b of the chargeable and dischargeable parking space 32 to the available space among the one or more first parking spaces 32a (step S130). The reason for moving a pallet 40 with a vehicle in a second parking space 32b to the available space among the one or more first parking spaces 32a is to park more electric vehicles in the one or more first parking spaces 32a closer to the predetermined facility 10 and to reduce the power loss (loss) when supplying the power from the battery in the electric vehicle to the predetermined facility 10. Note that such movement of one or more pallets 40 will create available space in the one or more second parking spaces 32b.

When the electronic control unit 60 determines in step S120 that the available space among the one or more chargeable and dischargeable parking spaces 32 is not among the one or more first parking spaces 32a, or has moved in step S130 the one or more pallets 40 carrying vehicles in the one or more second parking spaces 32b to the available space in the one or more first parking spaces 32a, the electronic control unit 60 extracts one or more pallets 40 with vehicles that are parked in one or more other parking spaces and are permitted to feed the predetermined facility 10 from the pallets 40 with the vehicles (Step S140). This process can be performed by searching for pallets carrying vehicles that have been assigned the one or more chargeable parking spaces 34 or the one or more general parking spaces 36 in the parked vehicle information and that are permitted to feed the predetermined facility 10.

The electronic control unit 60 determines whether or not there is a pallet 40 with a vehicle that is parked in another parking space that is permitted to feed power to the predetermined facility 10 (step S150) . When the electronic control unit 60 determines that there is a pallet 40 with a corresponding vehicle on it, it moves the pallet 40 to an available space among the one or more second parking spaces 32b of the one or more chargeable and dischargeable parking spaces 32 (step S160) and ends this process. The reason for moving the corresponding pallet 40 to the available space among the one or more second parking spaces 32b of the one or more chargeable and dischargeable parking spaces 32 is to allow more electric vehicles to park in the one or more chargeable and dischargeable parking spaces 32 and to supply power from the batteries on more electric vehicles to the predetermined facility 10. On the other hand, when the electronic control unit 60 determines that there is no pallet 40 that carries a corresponding vehicle, it terminates this process without moving any pallet 40.

In the parking management system 20 of the embodiment described above, when an available space among the one or more first parking spaces 32a of the one or more chargeable and dischargeable parking spaces 32 becomes available, one or more pallets 40 with vehicles in the one or more second parking spaces 32b of the one or more chargeable and dischargeable parking spaces 32 are moved to the available space in the one or more first parking spaces 32a. This allows more electric vehicles to be parked in the one or more first parking spaces 32a closer to the predetermined facility 10, thereby reducing the power loss (loss) when supplying power from batteries mounted on electric vehicles to the predetermined facility 10.

In the parking management system 20 of the embodiment, when an available space becomes available in the one or more second parking spaces 32b of the one or more chargeable and dischargeable parking spaces 32, one or more pallets 40 of other parking spaces with vehicles that are permitted to feed the predetermined facility 10 are moved to the one or more second parking spaces 32b. This allows more electric vehicles to be parked in the one or more chargeable and dischargeable parking spaces 32 and more power from the batteries in the electric vehicles to be supplied to the predetermined facility 10.

In the parking management system 20 of the embodiment, the one or more chargeable and dischargeable parking spaces 32 are divided into one or more first parking spaces 32a and one or more second parking spaces 32b, but such a division may not be made. In this case, the pallet movement process should move one or more pallets 40 of the other one or more parking spaces with vehicles permitted to feed the predetermined facility 10 to the one or more chargeable and dischargeable parking spaces 32 when an available space among the one or more chargeable and dischargeable parking spaces 32 becomes available.

In the parking management system 20 of the embodiment, when an available space is created among the one or more second parking spaces 32b of the one or more chargeable and dischargeable parking spaces 32, the one or more pallets 40 of the other parking space with vehicles permitted to feed the predetermined facility 10 shall be moved to the one or more second parking spaces 32b. However, when an available space in the one or more chargeable and dischargeable parking spaces 32 becomes available, one or more pallets 40 of the pallets in the one or more chargeable parking space 34 with vehicles permitted to feed the predetermined facility 10 may be moved to the chargeable and dischargeable parking space 32 or one or more pallets 40 of the pallets in the one or more chargeable parking spaces 34 with vehicles having other feedable conditions in addition to the conditions that allow it to feed the predetermined facility 10 may be moved to the chargeable and dischargeable parking space 32. Other power supply conditions include, for example, the condition that the capacity of the battery is above a predetermined value or the remaining capacity of the battery is above a predetermined value.

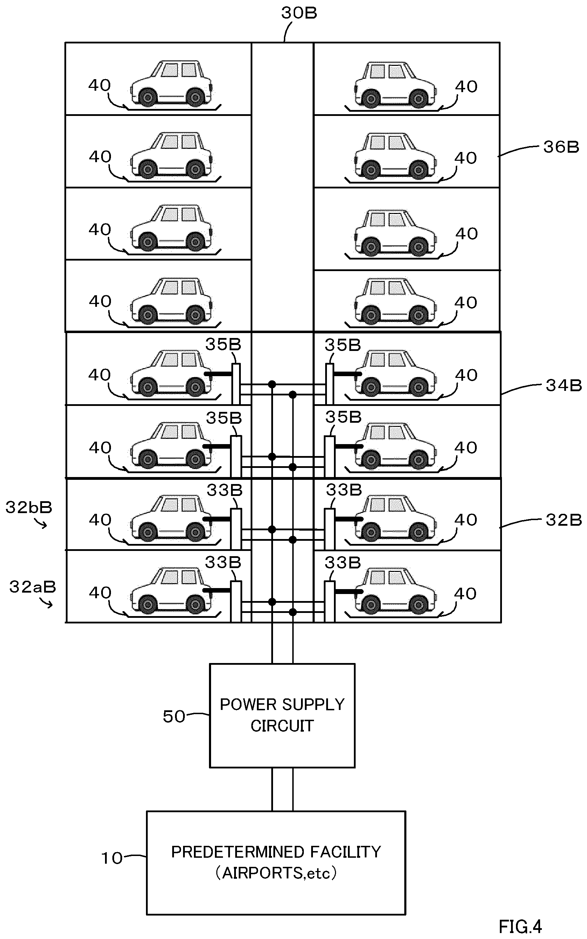

In the parking management system 20 of the embodiment, the one or more chargeable and dischargeable parking spaces 32 with charging and discharging devices 33 are placed in the area closest to the predetermined facility 10 among the parking lot 30 in plan view, the one or more chargeable parking spaces 34 with charging devices 35 are placed in the area of the parking lot 30 that is next closest to the predetermined facility 10 after the one or more chargeable and dischargeable parking space 32, and the one or more general parking spaces 36 are located in the area of parking lot 30 that is farthest from the predetermined facility 10. However, as shown in the modified example in Figure 4, the one or more chargeable and dischargeable parking spaces 32B with charging and discharging devices 33B may be placed at the lowest level of a multi-level parking lot 30B that is closest to the predetermined facility 10, the chargeable parking spaces 34B with charging devices 35B may be placed at a middle level of the multi-level parking lot 30B that is next to the one or more chargeable and dischargeable parking spaces 32B and closer to the predetermined facility 10, and the one or more general parking spaces 36B may be placed at a higher level of the multilevel parking lot 30B that is farther from the predetermined facility 10. Furthermore, one or more first parking spaces 32aB may be placed on a lower level of the one or more chargeable and dischargeable parking spaces 32B in the multi-level parking lot 30B, and one or more second parking spaces 32bB may be placed on an upper level.

The parking reservation management device 20 in the embodiment assumes an electric vehicle 120 that runs by driving the motor 122 using power from a battery 124 to drive the motor 122 as a vehicle that can use the chargeable and dischargeable parking space 32 in the parking lot 30. However, any vehicle that is equipped with a chargeable and dischargeable battery is acceptable. For example, the vehicle may be a hybrid vehicle with an engine, motor, and battery, or a fuel cell vehicle with a fuel cell and battery, or various other configurations.

The following is an explanation of the correspondence between the main elements of the embodiment and the main elements of the disclosure described in the section on means to solve the problem. In the embodiment, pallets 40 correspond to "pallets", chargeable and dischargeable parking spaces 32 correspond to " chargeable and dischargeable parking spaces", charging and discharging devices 33 correspond to " charging and discharging devices", and electronic control unit 60 corresponds to " controller".

The correspondence between the major elements of the embodiment and the major elements of the disclosure described in the means to solve a problem section is an example of how the embodiment can be used to specifically explain the embodiment of the disclosure described in the means to solve a problem section. This does not limit the elements of the disclosure described in the means to solve the problem section. In other words, interpretation of the disclosure described in the means to solve a problem section should be based on the description in that section, and the embodiment is only one specific example of the disclosure described in the means to solve a problem section.

The above is a description of the form for implementing this disclosure using the embodiment. However, the present disclosure is not limited in any way to these embodiments

### Industrial Applicability

This disclosure is applicable to the manufacturing industry for the parking management system and other applications.

## Claims

1. A parking management system equipped with a plurality of pallets(40) that can be moved in a parking space with a vehicle mounted on them, a plurality of charging and discharging devices (33) that are installed in chargeable and dischargeable parking spaces (32) and capable of supplying power to a predetermined facility(10), a controller(60) that is programmed to control the movement of the pallets (40) and control the charging and discharging devices (33) ;
the controller(60) is programmed to move a feedable pallet(40),among said plurality of pallets (40), carrying an electric vehicle(120) capable of supplying power to the predetermined facility(10), to the chargeable and dischargeable parking spaces(32), and
the parking management system is **characterized in that** it further comprises a plurality of charging devices (35) installed in chargeable parking spaces (34) that can only be used for charging, and **in that** the controller (60) is programmed to move the feedable pallet to the chargeable and dischargeable parking spaces (32) when the feedable pallet is in a general parking space(36) where neither charging nor feeding is allowed or in the chargeable parking spaces (34) .

2. The parking management system according to claim 1,
wherein the chargeable and dischargeable parking spaces(32) comprise a first parking space(32a) with a short feed line to the predetermined facility(10) and a second parking space(32b) with a longer feed line to the predetermined facility(10) compared to the first parking space(32a),
the controller(60) is programmed to preferentially move the feedable pallet to the first parking space(32a).

3. The parking management system according to claim 2,
wherein the chargeable and dischargeable parking spaces(32) are located in a part of a multi-story multi-level parking space or in a portion of a flat parking space arranged in a flat area.

4. The parking management system according to any one of claims 1 to 3,
wherein the chargeable and dischargeable parking spaces(32) are located at a short distance to the predetermined facility(10).

5. The parking management system according to any one of claims 1 to 4, wherein the controller(60) is programmed to preferentially move a conditioned pallet, among said plurality of pallets (40), carrying an electric vehicle(120) with an on-board battery in a condition to feed power to the predetermined facility(10), to the chargeable and dischargeable parking spaces (32) .

## Patentansprüche

1. Stellplatzverwaltungssystem, ausgestattet mit einer Vielzahl von Paletten (40), die in einem Stellplatzraum mit einem darauf montierten Fahrzeug bewegt werden können, einer Vielzahl von Lade- und Entladevorrichtungen (33), die in aufladbaren und entladbaren Stellplatzräumen (32) installiert sind und in der Lage sind, eine vorbestimmte Einrichtung (10) mit Energie zu versorgen, einer Steuerung (60), die programmiert ist, um die Bewegung der Paletten (40) zu steuern und die Lade- und Entladevorrichtungen (33) zu steuern;
wobei die Steuerung (60) programmiert ist, um eine zuführbare Palette (40) unter der Vielzahl von Paletten (40), die ein Elektrofahrzeug (120) trägt, das in der Lage ist, die vorbestimmte Einrichtung (10) mit Energie zu versorgen, zu den aufladbaren und entladbaren Stellplatzräumen (32) zu bewegen, und
das Stellplatzverwaltungssystem **dadurch gekennzeichnet ist, dass** es ferner eine Vielzahl von Ladevorrichtungen (35) umfasst, die in aufladbaren Stellplatzräumen (34) installiert sind, die nur zum Aufladen verwendet werden können, und dass die Steuerung (60) programmiert ist, um die zuführbare Palette zu den aufladbaren und entladbaren Stellplatzräumen (32) zu bewegen, wenn die zuführbare Palette in einem allgemeinen Stellplatzraum (36), auf dem weder Aufladen noch Zuführen erlaubt ist, oder in den aufladbaren Stellplatzräumen (34) ist.

2. Stellplatzverwaltungssystem nach Anspruch 1, wobei die aufladbaren und entladbaren Stellplatzräume (32) einen ersten Stellplatzraum (32a) mit einer kurzen Zuleitung zu der vorbestimmten Einrichtung (10) und einen zweiten Stellplatzraum (32b) mit einer im Vergleich zum ersten Stellplatzraum (32a) längeren Zuleitung zu der vorbestimmten Einrichtung (10) umfassen,
die Steuerung (60) programmiert ist, um die zuführbare Palette vorzugsweise zu dem ersten Stellplatz (32a) zu bewegen.

3. Stellplatzverwaltungssystem nach Anspruch 2, wobei sich die aufladbaren und entladbaren Stellplatzräume (32) in einem Teil eines mehrstöckigen mehrebenen Stellplatzraums oder in einem Abschnitt eines flachen Stellplatzraums, der in einem flachen Bereich angeordnet ist, befinden.

4. Stellplatzverwaltungssystem nach einem der Ansprüche 1 bis 3,
wobei sich die aufladbaren und entladbaren Stellplatzräume (32) in geringer Entfernung von der vorbestimmten Einrichtung (10) befinden.

5. Stellplatzverwaltungssystem nach einem der Ansprüche 1 bis 4, wobei die Steuerung (60) programmiert ist, um vorzugsweise eine konditionierte Palette aus der Vielzahl von Paletten (40), die ein Elektrofahrzeug (120) mit einer Bordbatterie in einem Zustand trägt, in dem es die vorbestimmte Einrichtung (10) mit Strom versorgt, zu den aufladbaren und entladbaren Stellplatzräumen (32) zu bewegen.

## Revendications

1. Système de gestion de stationnement équipé d'une pluralité de palettes (40) qui pouvent être déplacées dans un espace de stationnement avec un véhicule monté sur ces dernières, d'une pluralité de dispositifs de charge et de décharge (33) qui sont installés dans des places de stationnement chargeables et déchargeables (32) et aptes à fournir de l'énergie à une installation prédéterminée (10), d'un organe de commande (60) qui est programmé pour commander le déplacement des palettes (40) et commander les dispositifs de charge et de décharge (33) ;
l'organe de commande (60) est programmé pour déplacer une palette pouvant être alimentée (40), parmi ladite pluralité de palettes (40), portant un véhicule électrique (120) apte à fournir de l'énergie à l'installation prédéterminée (10), vers les places de stationnement chargeables et déchargeables (32), et
le système de gestion de stationnement est **caractérisé en ce qu'**il comprend en outre une pluralité de dispositifs de charge (35) installés dans des places de stationnement chargeables (34) qui peuvent n'être utilisées que pour la charge, et **en ce que** l'organe de commande (60) est programmé pour déplacer la palette pouvant être alimentée vers les places de stationnement chargeables et déchargeables (32) lorsque la palette pouvant être alimentée se trouve dans une place de stationnement générale (36) où ni la charge ni l'alimentation ne sont autorisées, ou dans les places de stationnement chargeables (34).

2. Système de gestion de stationnement selon la revendication 1,
dans lequel les places de stationnement chargeables et déchargeables (32) comprennent une première place de stationnement (32a) avec une ligne d'alimentation courte vers l'installation prédéterminée (10) et une deuxième place de stationnement (32b) avec une ligne d'alimentation plus longue vers l'installation prédéterminée (10) par rapport à la première place de stationnement (32a),
l'organe de commande (60) étant programmé pour déplacer, de manière préférentielle, la palette pouvant être alimentée vers la première place de stationnement (32a).

3. Système de gestion de stationnement selon la revendication 2, dans lequel les places de stationnement chargeables et déchargeables (32) sont situées dans une partie d'un parking à plusieurs étages à plusieurs niveaux ou dans une partie d'un espace de stationnement au sol disposé sur une zone plane.

4. Système de gestion de stationnement selon l'une quelconque des revendications 1 à 3,
dans lequel les places de stationnement chargeables et déchargeables (32) sont situées à une courte distance de l'installation prédéterminée (10).

5. Système de gestion de stationnement selon l'une quelconque des revendications 1 à 4, dans lequel l'organe de commande (60) est programmé pour déplacer, de manière préférentielle, une palette conditionnée, parmi ladite pluralité de palettes (40), portant un véhicule électrique (120) avec une batterie embarquée dans un état permettant d'alimenter en énergie l'installation prédéterminée (10), vers les places de stationnement chargeables et déchargeables (32).
